# EUROPÄISCHE PATENTSCHRIFT

(11) **EP 3 421 277 B1**
(45) Veröffentlichungstag und Bekanntmachung des Hinweises auf die Patenterteilung: **10.08.2022**
(21) Anmeldenummer: 18175156.1
(22) Anmeldetag: 30.05.2018
(51) Int. Cl.: B60J 5/04, B60J 5/06

(54) **TÜRFLÜGEL MIT OBEREM, REDUZIERTEM TEILBEREICH FÜR EINE AUSSENSPIEGELKONSTRUKTION**
DOOR WING PROVIDED WITH UPPER, REDUCED PARTIAL REGION FOR AN OUTSIDE MIRROR CONSTRUCTION
BATTANT DE PORTE POURVU D'UNE ZONE SUPÉRIEURE RÉDUITE POUR UNE CONSTRUCTION DE MIROIR EXTÉRIEUR

(30) Priorität: 21.06.2017 DE 102017113779
(43) Veröffentlichungstag der Anmeldung: 02.01.2019
(73) Patentinhaber: MAN Truck & Bus SE, 80995 München (DE)
(72) Erfinder: Schilling, Fabrice, 07546 Gera (DE); Hunzelmann, Tobias, 81925 München (DE)
(74) Vertreter: v. Bezold & Partner Patentanwälte - PartG mbB

(56) Entgegenhaltungen:
- WO-A1-03/061999
- FR-A1- 2 759 326
- GB-A- 403 715
- GB-A- 462 481
- GB-A- 742 698
- GB-A- 1 346 050
- US-A- 5 951 098
- US-A1- 2012 247 019

## Beschreibung

Die Erfindung betrifft eine Anordnung zur Anbringung an ein Fahrzeug, vorzugsweise ein Nutzfahrzeug, insbesondere einen Omnibus oder einen Lastkraftwagen, mit einer Außenspiegelkonstruktion und zweckmäßig einem oder mehreren Türflügeln.

WO 03/061999 A1 offenbart zunächst allgemein eine Türe eines Fahrzeugs mit oberem, reduziertem Eckbereich. Omnibusse umfassen in ihrem vorderen Bereich üblicherweise Außen-Rückspiegelkonstruktionen für den Fahrer und weisen zweckmäßig entweder sich nach innen öffnende Türkonstruktionen oder sich nach außen öffnende Türkonstruktionen, meist sognannte Schwenk-Schiebe-Türen, auf. Schwenk-Schiebe-Türen umfassen in der Regel zumindest einen sich nach außen öffnenden rechteckförmigen Türflügel. Nachteilhaft an derartigen Anordnungen ist, dass der sich nach außen öffnende Türflügel relativ weit von der Außen-Rückspiegelkonstruktion beabstandet sein muss, um eine Kollision mit der Rückspiegelkonstruktion während des Öffnens/Schließens des Türflügels zu vermeiden.

Eine Aufgabe der Erfindung ist es, eine kompakte Anordnung mit einer Außenspiegelkonstruktion und einem sich insbesondere nach außen öffnenden Türflügel zu schaffen.

Diese Aufgabe wird mit den Merkmalen des unabhängigen Anspruchs gelöst. Vorteilhafte Weiterbildungen der Erfindung sind den abhängigen Ansprüchen und der folgenden Beschreibung bevorzugter Ausführungsformen der Erfindung zu entnehmen.

Die Erfindung betrifft eine Anordnung zur Anbringung an ein Fahrzeug, vorzugsweise ein Nutzfahrzeug, insbesondere einen Omnibus oder Lastkraftwagen.

Die Anordnung umfasst eine Außenspiegelkonstruktion mit zumindest einer Spiegelfläche und zumindest einen sich insbesondere nach außen und/oder vorzugsweise vorne öffnenden Türflügel. Die Außenspiegelkonstruktion dient zweckmäßig wie üblich für einen Fahrer des Fahrzeugs.

Die Anordnung zeichnet sich insbesondere dadurch aus, dass der Türflügel einen reduzierten Teilbereich aufweist, wobei der reduzierte Teilbereich zur Kollisionsvermeidung Platz (z. B. einen Aufnahmeraum oder Aufnahmebereich) für die Außenspiegelkonstruktion schafft, vorzugsweise so, dass der reduzierte Teilbereich zumindest abschnittsweise von der Außenspiegelkonstruktion ausgefüllt werden kann, z. B. zeitweise während eines Öffnungs- und Schließvorgangs des Türflügels und/oder in einem zweckmäßig vollständig geöffneten Zustand des Türflügels.

Dadurch wird insbesondere ermöglicht, dass der Türflügel und die Außenspiegelkonstruktion kompakt und relativ nahe aneinander positioniert werden können.

Es ist möglich, dass der reduzierte Teilbereich als oberer, vorzugsweise vorderer, reduzierter Eckbereich ausgeführt ist.

Der reduzierte Teilbereich kann z. B. an einer oberen, vorzugsweise vorderen, Nebenschließkante (NSK) des Türflügels ausgebildet sein.

Es ist möglich, dass der reduzierte Teilbereich als schräger oder abgerundeter Eckbereich ausgeführt ist und/oder an die Form der Außenspiegelkonstruktion angepasst ist. Der reduzierte Teilbereich kann insbesondere an die Form einer Spiegelfläche der Außenspiegelkonstruktion angepasst sein, z. B. eine Spiegelfläche, die auf einen z. B. vorderen Einstiegsbereich des Fahrzeugs gerichtet ist und/oder als Weitwinkelspiegel ausgeführt ist.

Erfindungsgemäß umfasst die Anordnung auch ein Türportal (z. B. einen Türrahmen), wobei das Türportal mit einem Funktionsteil versehen ist, um den reduzierten Teilbereich z. B. blendenförmig abzudecken oder zu schließen, wenn der Türflügel in einem zweckmäßig vollständig geschlossenen Zustand ist.

Das Türportal ist vorzugsweise wie üblich zur festen Montage an das Fahrzeug ausgeführt.

Erfindungsgemäß ist der Türflügel, das Türportal und/oder das Funktionsteil mit einer Zuhalteeinrichtung zum Zuhalten des Türflügels, z. B. gegen Sog während einer Fahrt des Fahrzeugs, versehen.

Somit kann der Türflügel mit einer Zuhalteeinrichtung ausgestattet sein und alternativ oder ergänzend das Türportal oder das Funktionsteil mit einer Zuhalteeinrichtung ausgestattet sein.

Die Zuhalteeinrichtung kann z. B. in der dem reduzierten Teilbereich zugewandten Ecke (zweckmäßig des Türflügels und/oder des Türportals) angeordnet sein, z. B. darin integriert sein. Alternativ oder ergänzend kann die Zuhalteeinrichtung im reduzierten Teilbereich angeordnet sein, z. B. darin integriert sein.

Die Zuhalteeinrichtung kann z. B. als Arretiereinrichtung, als Reibungseinrichtung und/oder als Bolzen-Keil-Einrichtung ausgeführt sein.

Erfindungsgemäß weist der Türflügel als Zuhalteeinrichtung ein mit dem Türflügel mitschwenkbares Haltestück auf. Das Haltestück ist vorzugsweise fix an dem Türflügel montierbar.

Erfindungsgemäß weist das Türportal und/oder das Funktionsteil als Zuhalteeinrichtung ein Gegenstück auf.

Erfindungsgemäß gelangt durch das Zufahren des Türflügels das Haltestück mit dem Gegenstück in Eingriff, vorzugsweise fährt das Haltestück hinter das Gegenstück, um zweckmäßig so mit dem Gegenstück in Eingriff zu gelangen.

Das Gegenstück ist vorzugsweise über das Funktionsteil fest an dem Fahrzeug, vorzugsweise dem Türportal, montierbar und somit insbesondere mit dem Türflügel nicht mitschwenkbar. Es sind aber auch Ausführungsformen möglich, bei denen das Gegenstück direkt am Fahrzeug, vorzugsweise dem Türportal, angebracht ist.

Das Funktionsteil erfüllt somit vorzugsweise zwei Funktionen, einerseits eine Abdeck-/Schließfunktion (insbesondere "Blendenfunktion") und andererseits eine Haltefunktion.

Es ist möglich, dass das Haltestück einen Bolzen (z. B. Zapfen, Pin etc.) umfasst und das Gegenstück einen Keil (z. B. eine Rampe etc.) umfasst oder aber das Haltestück einen Keil umfasst und das Gegenstück einen Bolzen umfasst.

Es ist möglich, dass das Funktionsteil vorzugsweise unten eine Öffnung aufweist. Die Öffnung dient vorzugsweise zur Vermeidung einer Kollision des Funktionsteils mit dem Haltestück, z. B. dann, wenn der Türflügel auf- und zugeschwenkt wird.

Die Außenspiegelkonstruktion kann zumindest einen Rückspiegel und/oder Weitwinkelspiegel umfassen.

Vorzugsweise kann die Außenspiegelkonstruktion zumindest zwei in unterschiedliche Richtungen ausgerichtete Spiegelflächen umfassen. Eine Spiegelfläche kann z. B. auf einen vorzugsweise vorderen Einstiegsbereich des Fahrzeugs gerichtet sein und/oder eine andere Spiegelfläche kann als Rückspiegel dienen. Alternativ oder ergänzend kann die Außenspiegelkonstruktion zumindest zwei unterschiedliche Spiegelkonfigurationen aufweisen, z. B. einen zweckmäßig üblichen Rückspiegel und einen Weitwinkelspiegel.

Der Türflügel ist vorzugsweise Teil einer z. B. zweiflügeligen Schwenk-Schiebe-Türe. Alternativ oder ergänzend öffnet sich der Türflügel relativ zum Fahrzeug zweckmäßig nach vorne und/oder nach außen.

Die Schwenk-Schiebe-Türe ist vorzugsweise mit getrennter Türflügelbetätigung ausgeführt. Dadurch kann insbesondere ermöglicht werden, dass ein Türflügel geschlossen bleibt, während der andere Türflügel geöffnet wird, so dass z. B. ein separates Öffnen der Türflügel realisiert werden kann.

Die Erfindung umfasst auch ein Fahrzeug, z. B. ein Nutzfahrzeug, insbesondere einen Omnibus oder Lastkraftwagen, mit einer Anordnung wie hierin beschrieben.

Bei einer besonders bevorzugten Ausführungsform kann zumindest eine Spiegelfläche der Außenspiegelkonstruktion auf einen insbesondere vorderen Einstiegsbereich des Fahrzeugs gerichtet sein und/oder einen Weitwinkelspiegel umfassen, wobei der reduzierte Teilbereich Platz für diese zumindest eine Spiegelfläche schafft. Alternativ oder ergänzend kann eine andere Spiegelfläche der Außenspiegelkonstruktion als Rückspiegel dienen.

Im Rahmen der Erfindung kann die Außenspiegelkonstruktion somit z. B. zumindest zwei oder sogar zumindest drei voneinander differenzierbare Spiegelflächen umfassen.

Die zuvor beschriebenen bevorzugten Ausführungsformen und Merkmale der Erfindung sind miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt eine perspektivische Außenansicht einer Anordnung gemäß einer Ausführungsform der Erfindung,
- Figur 2: zeigt eine Seitenansicht der Anordnung von innen,
- Figur 3: zeigt eine Seitenansicht der Anordnung von außen,
- Figur 4: zeigt eine Seitenansicht der Anordnung von außen,
- Figur 5: zeigt eine Seitenansicht der Anordnung von außen,
- Figur 6: zeigt eine Seitenansicht der Anordnung von innen,
- Figur 7: zeigt eine perspektivische Detailansicht der Anordnung von innen,
- Figur 8: zeigt eine perspektivische Detailansicht der Anordnung von innen,
- Figur 9: zeigt eine perspektivische Detailansicht der Anordnung von innen,
- Figur 10: zeigt eine Detailansicht der Anordnung von innen,
- Figur 11: zeigt eine Detailansicht der Anordnung von innen, und
- Figur 12: zeigt eine Detailansicht der Anordnung von innen.

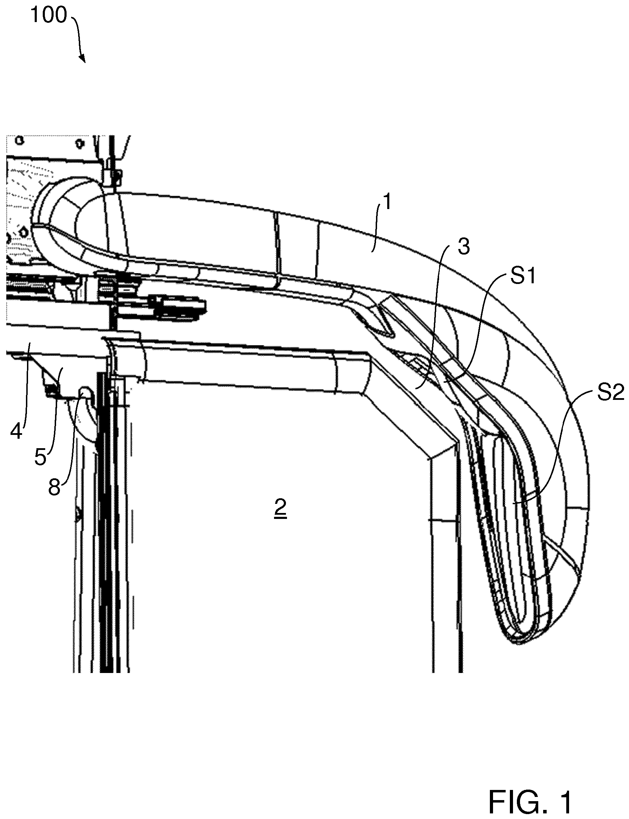

Figur 1 zeigt eine perspektivische Ansicht einer Anordnung 100 mit einer Außenspiegelkonstruktion 1 mit zwei Spiegelflächen S1, S2 und einem Türflügel 2, wobei sich der Türflügel 2 in einem vollständig geöffneten Zustand befindet.

Der Türflügel 2 ist Teil einer Schwenk-Schiebe-Türe mit zwei sich nach außen öffnenden Türflügeln 2, 20 und somit Teil einer zweiflügeligen Schwenk-Schiebe-Türe.

Der Türflügel 2 stellt einen relativ zum Fahrzeug vorderen Türflügel dar, wobei der Türflügel 20 einen relativ zum Fahrzeug hinteren Türflügel darstellt.

Der Türflügel 2 umfasst einen reduzierten Teilbereich 3, wobei der reduzierte Teilbereich 3 zur Kollisionsvermeidung Platz für die Außenspiegelkonstruktion 1 schafft, so dass der reduzierte Teilbereich 3 zumindest abschnittsweise von der Außenspiegelkonstruktion 1, insbesondere der Spiegelfläche S1, ausgefüllt werden kann und zwar entweder in einem vollständig geöffneten Zustand des Türflügels 2 oder zumindest zeitweise während eines Öffnungs- oder Schließvorgangs des Türflügels 2.

Der reduzierte Teilbereich 3 ist als oberer, relativ zum Fahrzeug vorderer reduzierter Eckbereich ausgeführt und insbesondere an einer oberen, relativ zum Fahrzeug vorderen Nebenschließkante (NSK) des Türflügels 2 ausgebildet.

Die zwei Spiegelflächen S1, S2 können z. B. in unterschiedliche Richtungen gerichtet sein. Die Spiegelfläche S1 kann z. B. auf einen Einstiegsbereich des Fahrzeugs gerichtet sein, wobei die Spiegelfläche S2 als zweckmäßig rechter Rückspiegel dienen kann.

Bevorzugt stellt die Spiegelfläche S1 einen Weitwinkelspiegel dar, wobei die Spiegelfläche S2 zweckmäßig einen rechten Rückspiegel darstellt.

Der reduzierte Teilbereich 3 schafft insbesondere Platz für die Spiegelfläche S1, so dass insbesondere die Spiegelfläche S1 im geöffneten Zustand des Türflügels 2 zumindest teilweise den reduzierten Teilbereich 3 ausfüllen kann.

In der in Figur 1 gezeigten Ausführungsform ist der reduzierte Teilbereich 3 als schräger Eckbereich ausgeführt und insbesondere im Wesentlichen an die Form der Spiegelfläche 1 angepasst, wobei auch abgerundete oder anders reduzierte Teil-/Eckbereiche möglich sind.

Die Anordnung 100 umfasst auch ein Türportal 4, das zunächst wie üblich durch die zwei Türflügel 2, 20 geöffnet und geschlossen werden kann.

Das Türportal 4 ist mit einem Funktionsteil 5 versehen, wobei das Funktionsteil 5 dazu dient, den reduzierten Teilbereich 3 ähnlich z. B. einer Blende abzudecken oder zu schließen, wenn der Türflügel 2 in einem geschlossenen Zustand ist. Ohne das Funktionsteil 5 ergäbe sich durch den reduzierten Teilbereich 3 eine unerwünschte Öffnung zwischen dem Innenraum des Fahrzeugs und der Außenumgebung des Fahrzeugs. Das Funktionsteil 5 ist vorzugsweise in seinem unteren Bereich mit einer Öffnung 8 versehen, auf die weiter unten detaillierter eingegangen wird.

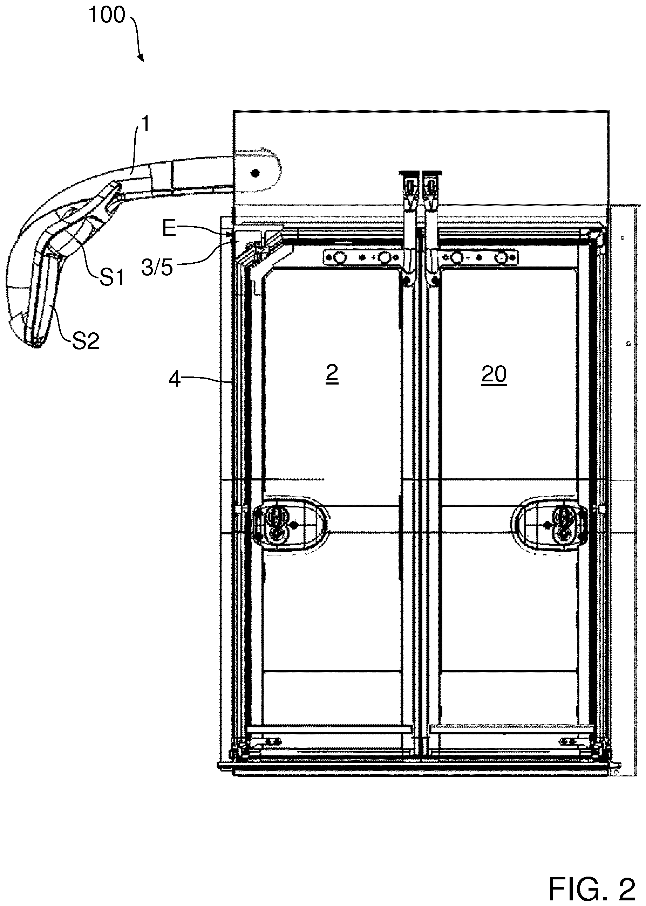

Figur 2 zeigt eine Seitenansicht der Anordnung 100 von innen, wobei sich die zwei Türflügel 2, 20 in einem geschlossenen Zustand befinden. Bezugszeichen E zeigt auf eine dem reduzierten Teilbereich 3 zugewandte Ecke des Türflügels 2 und des Türportals 4, an oder in der eine weiter unten näher beschriebene Zuhalteeinrichtung 6, 7 angeordnet ist.

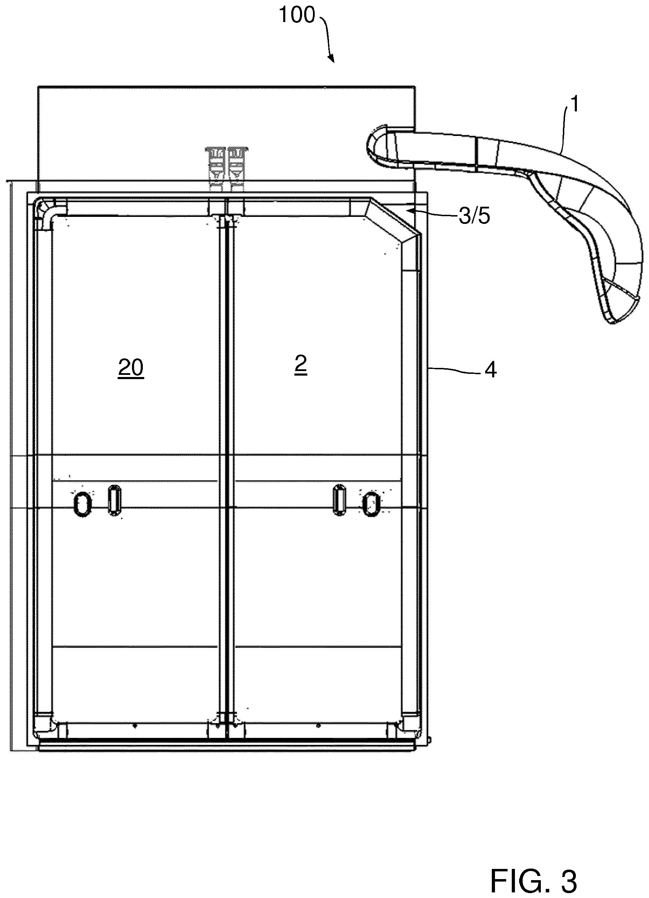

Figur 3 zeigt eine Seitenansicht der Anordnung 100 von außen, wobei sich die zwei Türflügel 2, 20 in einem geschlossenen Zustand befinden.

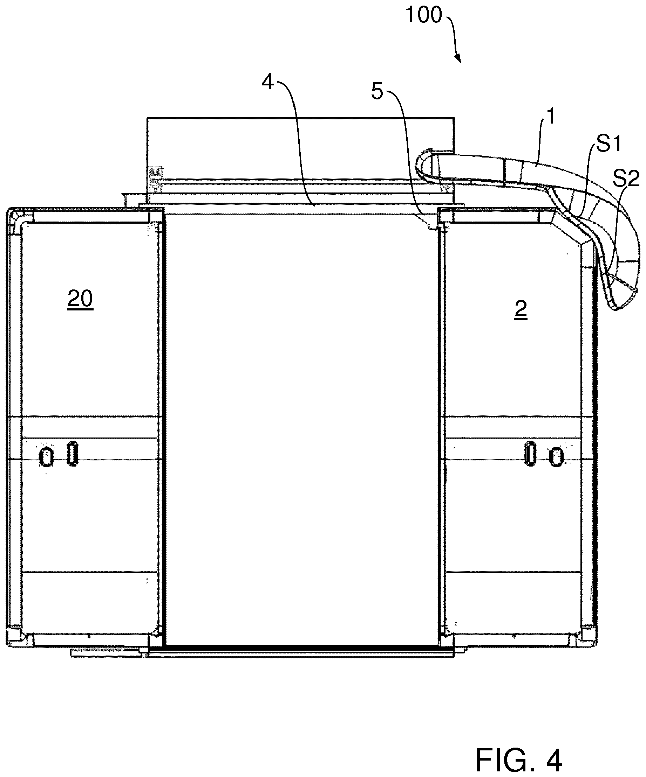

Figur 4 zeigt eine Seitenansicht der Anordnung 100 von außen, wobei sich die zwei Türflügel 2, 20 in einem geöffneten Zustand befinden.

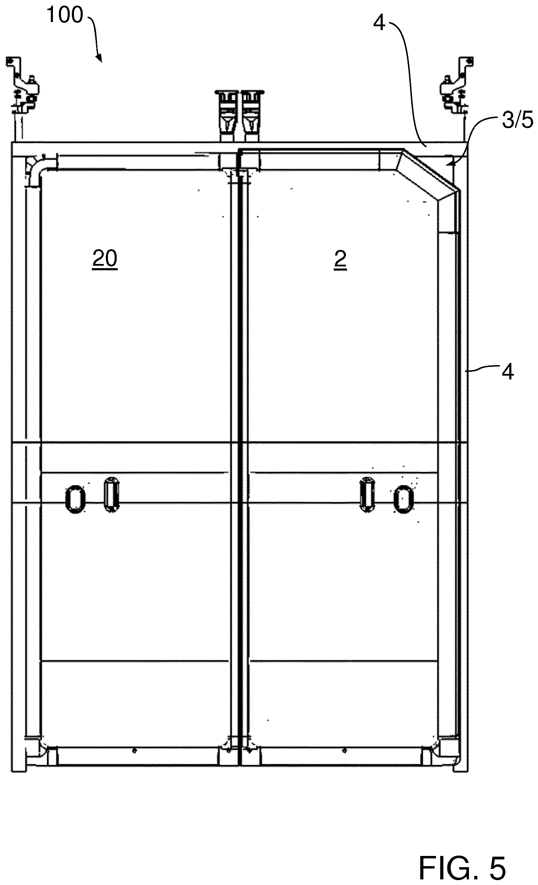

Figur 5 zeigt eine Seitenansicht der Anordnung 100 von außen, wobei sich die zwei Türflügel 2, 20 in einem geschlossenen Zustand befinden.

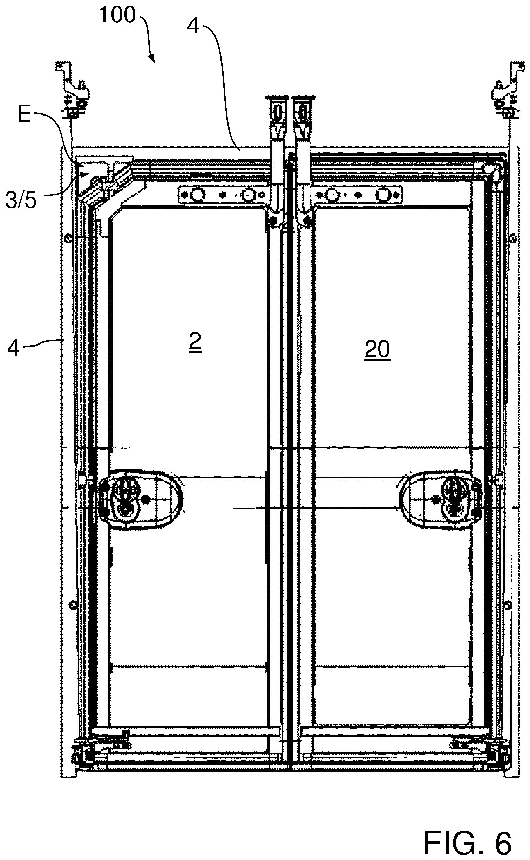

Figur 6 zeigt eine Seitenansicht der Anordnung 100 von innen, wobei sich die zwei Türflügel 2, 20 in einem geschlossenen Zustand befinden.

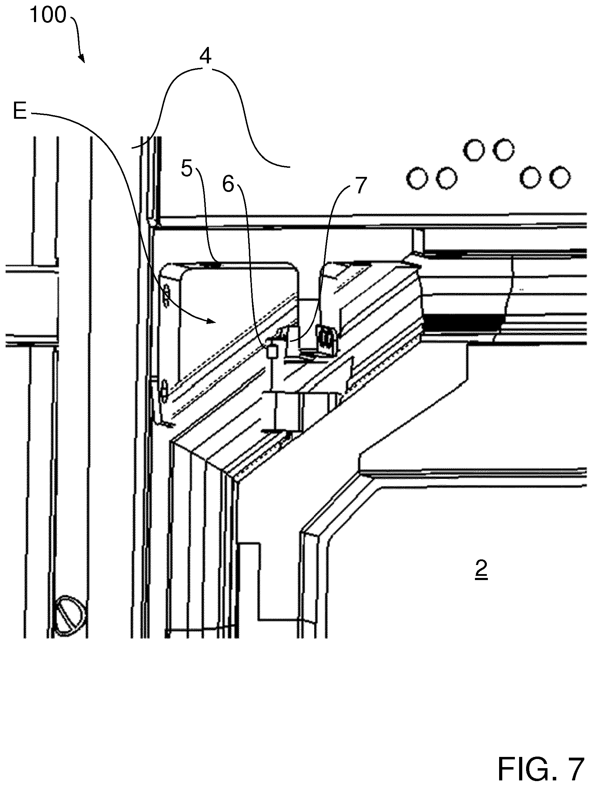

Figur 7 zeigt eine Detailansicht der Anordnung 100, wobei der Türflügel 2 in einem geschlossenen Zustand ist. Der reduzierte Teilbereich 3 ist in Figur 7 mit keinem Bezugszeichen versehen, weil er durch das Funktionsteil 5 abgedeckt oder ausgefüllt wird.

Figur 7 kann entnommen werden, dass der Türflügel 2 und das Funktionsteil 5 mit einer Zuhalteeinrichtung 6, 7 zum Zuhalten des Türflügels 2 ausgestattet ist. Die Zuhalteeinrichtung 6, 7 dient insbesondere zum Zuhalten des Türflügels 2 gegen Sog während einer Fahrt des Fahrzeugs und ist zweckmäßig in der dem reduzierten Teilbereich 3 zugewandten Ecke E des Türflügels 2 und des Türportals 4 angeordnet und kann sich auch im reduzierten Teilbereich 3 erstrecken.

Der Türflügel 2 umfasst als Zuhalteeinrichtung 6 ein mit dem Türflügel 2 mitschwenkbares Haltestück 6, z. B. einen Bolzen (Zapfen, Pin etc.).

Das Funktionsteil 5 umfasst als Zuhalteeinrichtung 7 ein Gegenstück 7 für das Haltestück 6, insbesondere einen Keil (Rampe etc.).

Das Haltestück 6 und das Gegenstück 7 sind so ausgeführt und angeordnet, dass durch ein Zufahren des Türflügels 2 das Haltestück 6 mit dem Gegenstück 7 in Eingriff gelangt, vorzugsweise so, dass es hinter das Gegenstück 7 fährt, um insbesondere ein durch Sog verursachtes Öffnen des Türflügels 2 zu verhindern.

Die Zuhalteeinrichtung 6, 7 kann zweckmäßig als Arretiereinrichtung, als Reibeinrichtung oder als Bolzen-Keil-Einrichtung oder eine Kombination hiervon ausgeführt sein.

Bei einer alternativen Ausführungsform kann auch das Türportal 4 mit einer Zuhalteeinrichtung 7 ausgestattet sein, so dass das Funktionsteil 5 nur die Schließ-/Abdeckfunktion erfüllt.

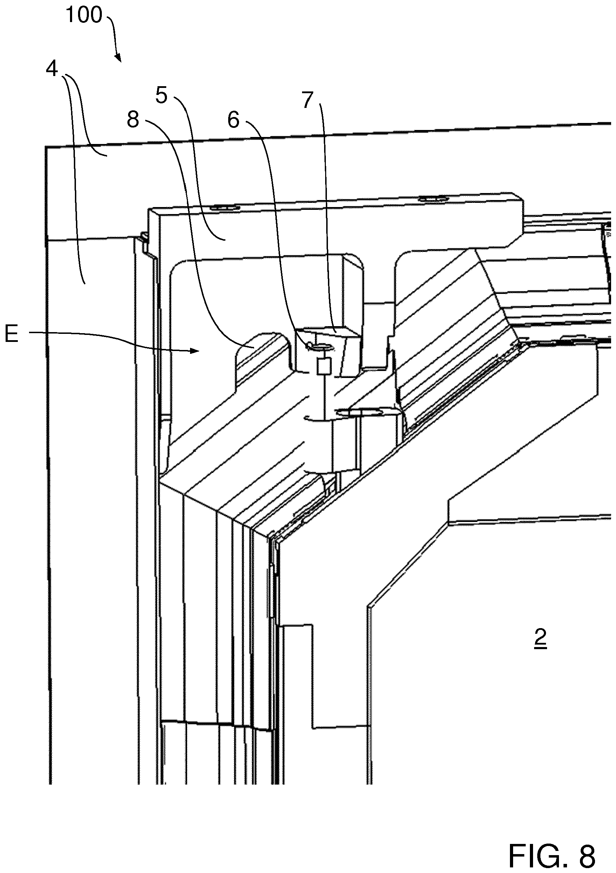

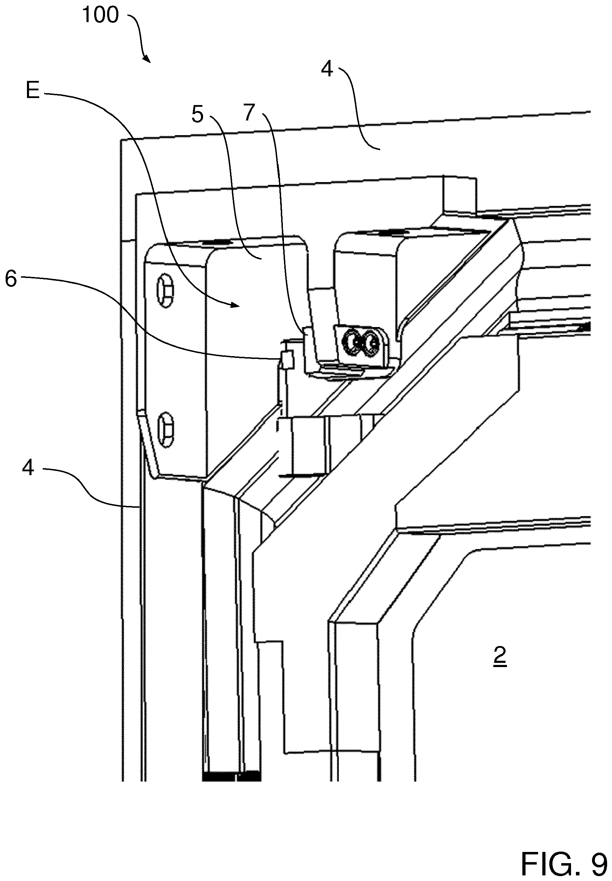

Die Figuren 8 und 9 zeigen Detailansichten der Anordnung 100 in einer gegenüber der Figur 7 anderen Perspektive. In Figur 8 ist insbesondere eine Öffnung 8 in dem Funktionsteil 5 zu sehen. Die Öffnung 8 ist in einem unteren Bereich des Funktionsteils 5 vorgesehen und dient zur Vermeidung einer Kollision des Funktionsteils 5 mit dem Haltestück 6, insbesondere dann, wenn der Türflügel 2 auf- und zugeschwenkt wird.

Die Schwenk-Schiebetüre ist mit sogenannter getrennter Türflügelbetätigung ausgeführt, wodurch ermöglicht wird, dass ein Türflügel 2, 20 geschlossen bleibt, während der andere Türflügel 2, 20 geöffnet wird, so dass ein separates Öffnen der Türflügel 2. 20 realisierbar ist.

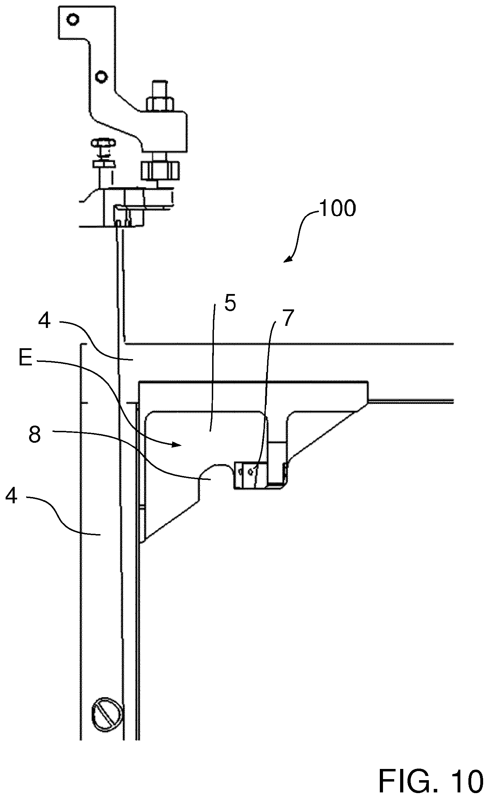

Figur 10 zeigt eine Seitenansicht der Anordnung 100 von innen, wobei der Türflügel 2 der Übersichtlichkeit halber weggelassen ist.

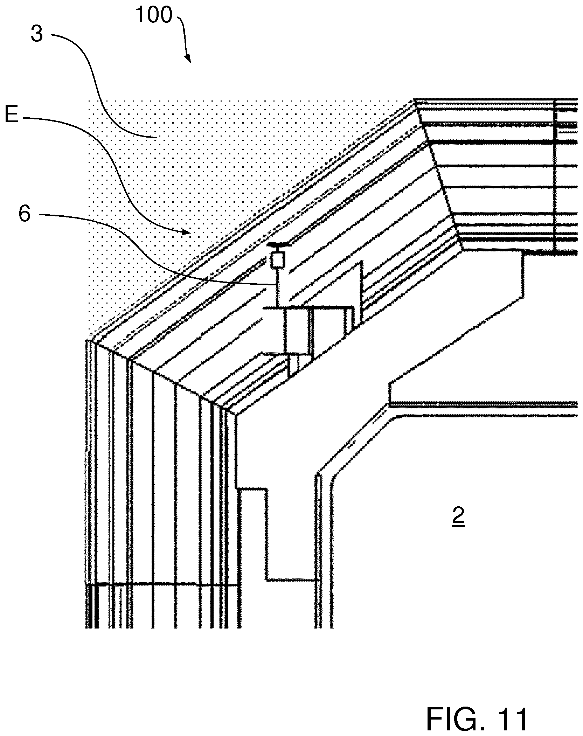

Figur 11 zeigt eine Seitenansicht der Anordnung 100 von innen, wobei der Übersichtlichkeit halber das Türportal 4 weggelassen ist.

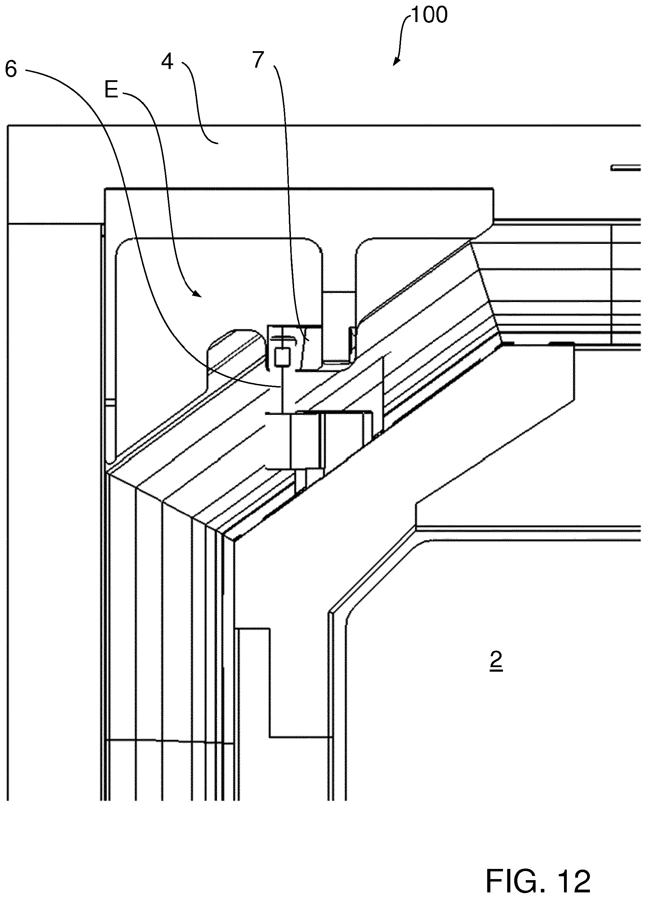

Figur 12 zeigt eine Seitenansicht der Anordnung 100 von innen, wobei der Türflügel 2 in einem geschlossenen Zustand befindlich ist und das Haltestück 6 mit dem Gegenstück 7 in Eingriff steht.

### Bezugszeichenliste

- 1: Außenspiegelkonstruktion
- S1: Spiegelfläche, vorzugsweise auf Einstiegsbereich des Fahrzeugs gerichtet und/oder Weitwinkelspiegel
- S2: Spiegelfläche, vorzugsweise Rückspiegel
- 2: Türflügel
- 3: Reduzierter Teilbereich
- 4: Türportal, insbesondere Türrahmen
- 5: Funktionsteil
- 6: Zuhalteeinrichtung, insbesondere Haltestück
- 7: Zuhalteeinrichtung, insbesondere Gegenstück
- 8: Öffnung
- 20: Türflügel
- 100: Anordnung
- E: Ecke

## Patentansprüche

1. Anordnung (100) zur Anbringung an ein Fahrzeug, vorzugsweise Nutzfahrzeug, wobei die Anordnung (100) umfasst: eine Außenspiegelkonstruktion (1) mit zumindest einer Spiegelfläche (S1, S2) und zumindest einen Türflügel (2), wobei der Türflügel (2) einen reduzierten Teilbereich (3) aufweist, wobei der reduzierte Teilbereich (3) zur Kollisionsvermeidung Platz für die Außenspiegelkonstruktion (1) schafft, vorzugsweise so, dass der reduzierte Teilbereich (3) von der Außenspiegelkonstruktion (1) zumindest abschnittsweise ausgefüllt werden kann,
**dadurch gekennzeichnet, dass**
die Anordnung (100) ein Türportal (4) umfasst, wobei das Türportal (4) mit einem Funktionsteil (5) versehen ist, um den reduzierten Teilbereich (3) abzudecken oder zu schließen, wenn der Türflügel (2) in einem geschlossenen Zustand ist, und
wobei der Türflügel (2), das Türportal (4) und/oder das Funktionsteil (5) mit einer Zuhalteeinrichtung (6, 7) zum Zuhalten des Türflügels (2), vorzugsweise gegen Sog während einer Fahrt des Fahrzeugs, versehen ist, und wobei einerseits der Türflügel (2) als Zuhalteeinrichtung (6) ein mit dem Türflügel (2) mitschwenkbares Haltestück (6) aufweist und andererseits das Türportal (4) und/oder das Funktionsteil (5) als Zuhalteeinrichtung (7) ein Gegenstück (7) aufweist und durch das Zufahren des Türflügels (2) das Haltestück (6) mit dem Gegenstück (7) in Eingriff gelangt, vorzugsweise hinter das Gegenstück (7) fährt.

2. Anordnung (100) nach Anspruch 1, **dadurch gekennzeichnet, dass** der reduzierte Teilbereich (3) als oberer, vorzugsweise vorderer, reduzierter Eckbereich ausgeführt ist.

3. Anordnung (100) nach Anspruch 1 oder 2, **dadurch gekennzeichnet, dass** der reduzierte Teilbereich (3) an einer oberen, vorzugsweise vorderen, Nebenschließkante des Türflügels (2) ausgebildet ist.

4. Anordnung (100) nach einem der vorhergehenden Ansprüche, **dadurch gekennzeichnet, dass** der reduzierte Teilbereich (3) als schräger oder abgerundeter Eckbereich ausgeführt ist oder an die Form der Außenspiegelkonstruktion (1) angepasst ist.

5. Anordnung (100) nach einem der vorhergehenden Ansprüche, **dadurch gekennzeichnet, dass** die Zuhalteeinrichtung (6, 7) in einer dem reduzierten Teilbereich (3) zugewandten Ecke (E) und/oder im reduzierten Teilbereich (3) angeordnet ist.

6. Anordnung (100) nach einem der vorhergehenden Ansprüche, **dadurch gekennzeichnet, dass** die Zuhalteeinrichtung (6, 7) als Arretiereinrichtung, als Reibungseinrichtung und/oder als Bolzen-Keil-Einrichtung ausgeführt ist.

7. Anordnung (100) nach einem der vorhergehenden Ansprüche, **dadurch gekennzeichnet, dass** das Haltstück (6) einen Bolzen umfasst und das Gegenstück (7) einen Keil umfasst oder umgekehrt.

8. Anordnung (100) nach einem der vorhergehenden Ansprüche, **dadurch gekennzeichnet, dass** das Funktionsteil (5) eine Öffnung (8) zur Vermeidung einer Kollision des Funktionsteils (5) mit dem Haltestück (6) aufweist.

9. Anordnung (100) nach einem der vorhergehenden Ansprüche, **dadurch gekennzeichnet, dass** die Außenspiegelkonstruktion (1) zumindest zwei in unterschiedliche Richtungen ausgerichtete Spiegelflächen (S1, S2) und/oder zumindest zwei unterschiedliche Spiegelkonfigurationen umfasst, vorzugsweise einen Rückspiegel und einen Weitwinkelspiegel.

10. Anordnung (100) nach einem der vorhergehenden Ansprüche, **dadurch gekennzeichnet, dass** der Türflügel (2) Teil einer vorzugsweise zweiflügeligen Schwenk-Schiebe-Türe ist und/oder sich nach außen öffnet.

11. Anordnung (100) nach Anspruch 10, **dadurch gekennzeichnet, dass** die Schwenk-Schiebe-Türe mit getrennter Türflügelbetätigung ausgeführt ist.

12. Fahrzeug, vorzugsweise Nutzfahrzeug, insbesondere Omnibus oder Lastkraftwagen, mit einer Anordnung (100) nach einem der vorhergehenden Ansprüche.

13. Fahrzeug nach Anspruch 12, **dadurch gekennzeichnet, dass** zumindest eine Spiegelfläche (S1) der Außenspiegelkonstruktion (1) einen Weitwinkelspiegel umfasst und/oder auf einen Einstiegsbereich des Fahrzeugs gerichtet ist und der reduzierte Teilbereich (3) Platz für die zumindest eine Spiegelfläche (S1) schafft, wobei vorzugsweise eine andere Spiegelfläche (S2) der Außenspiegelkonstruktion (1) als Rückspiegel dient.

## Claims

1. An arrangement (100) for fitting to a vehicle, preferably a utility vehicle, wherein the arrangement (100) comprises: an exterior mirror construction (1) having at least one mirror face (S1, S2) and at least one door leaf (2), wherein the door leaf (2) has a reduced part-region (3), wherein in order to avoid collisions the reduced part-region (3) provides space for the exterior mirror construction (1), preferably in such a manner that the reduced part-region (3) can be at least partially filled by the exterior mirror construction (1),
**characterized in that**
the arrangement (100) comprises a door portal (4), wherein the door portal (4) is provided with a functional component (5) in order to cover or close the reduced part-region (3) when the door leaf (2) is in a closed state, and
wherein the door leaf (2), the door portal (4) and/or the functional component (5) are/is provided with a closure retention device (6, 7) for keeping the door leaf (2) closed, preferably against suction during travel of the vehicle, and wherein on the one hand the door leaf (2) has as a closure retention device (6) a retention piece (6) which can also be pivoted with the door leaf (2) and on the other hand the door portal (4) and/or the functional component (5) has as a closure retention device (7) a counter-piece (7) and by closing the door leaf (2) the retention piece (6) moves into engagement with the counter-piece (7), preferably behind the counter-piece (7).

2. The arrangement (100) according to Claim 1, **characterized in that** the reduced part-region (3) is constructed as an upper, preferably front, reduced corner region.

3. The arrangement (100) according to Claim 1 or 2, **characterized in that** the reduced part-region (3) is constructed on an upper, preferably front, secondary closing edge of the door leaf (2).

4. The arrangement (100) according to one of the preceding claims, **characterized in that** the reduced part-region (3) is constructed as an oblique or rounded corner region or is adapted to the shape of the exterior mirror construction (1).

5. The arrangement (100) according to one of the preceding claims, **characterized in that** the closure retention device (6, 7) is arranged in a corner (E) facing the reduced part-region (3) and/or in the reduced part-region (3).

6. The arrangement (100) according to one of the preceding claims, **characterized in that** the closure retention device (6, 7) is constructed as a locking device, as a friction device and/or as a bolt/wedge device.

7. The arrangement (100) according to one of the preceding claims, **characterized in that** the retention piece (6) comprises a bolt and the counter-piece (7) comprises a wedge or vice versa.

8. The arrangement (100) according to one of the preceding claims, **characterized in that**, to avoid a collision of the functional component (5) with the retention piece (6), the functional component (5) has an opening (8).

9. The arrangement (100) according to one of the preceding claims, **characterized in that** the exterior mirror construction (1) comprises at least two mirror faces (S1, S2) which are orientated in different directions and/or at least two different mirror configurations, preferably a rear-view mirror and a wide angle mirror.

10. The arrangement (100) according to one of the preceding claims, **characterized in that** the door leaf (2) is part of a preferably two-leaf swing/sliding door and/or opens outwards.

11. The arrangement (100) according to Claim 10, **characterized in that** the swing/sliding door is constructed with a separate door leaf actuation.

12. A vehicle, preferably a utility vehicle, in particular a bus or a lorry, having an arrangement (100) according to one of the preceding claims.

13. The vehicle according to Claim 12, **characterized in that** at least one mirror face (S1) of the exterior mirror construction (1) comprises a wide angle mirror and/or is directed towards an entry region of the vehicle and the reduced part-region (3) provides space for the at least one mirror face (S1), wherein preferably another mirror face (S2) of the exterior mirror construction (1) acts as a rear-view mirror.

## Revendications

1. Agencement (100) destiné à être monté sur un véhicule, de préférence un véhicule utilitaire, l'agencement (100) comprenant : une construction de miroir extérieur (1) avec au moins une surface de miroir (S1, S2) et au moins un battant de porte (2), le battant de porte (2) présentant une zone partielle réduite (3), la zone partielle réduite (3) créant de la place pour la construction de miroir extérieur (1) afin d'éviter une collision, de préférence de telle sorte que la zone partielle réduite (3) peut être remplie, au moins par sections, par la construction de miroir extérieur (1),
**caractérisé en ce que**
l'agencement (100) comprend un cadre de porte (4), le cadre de porte (4) étant pourvu d'une partie fonctionnelle (5) pour couvrir ou fermer la zone partielle réduite (3) lorsque le battant de porte (2) est dans un état fermé, et
le battant de porte (2), le cadre de porte (4) et/ou la partie fonctionnelle (5) étant pourvus d'un dispositif de maintien fermé (6, 7) pour maintenir le battant de porte (2) fermé, de préférence contre une aspiration pendant un déplacement du véhicule, et, d'une part, le battant de porte (2) présentant, en tant que dispositif de maintien fermé (6), une pièce de retenue (6) pouvant pivoter avec le battant de porte (2) et, d'autre part, le cadre de porte (4) et/ou la partie fonctionnelle (5) présentant, en tant que dispositif de maintien fermé (7), une pièce antagoniste (7) et, par la fermeture du battant de porte (2), la pièce de retenue (6) venant en prise avec la pièce antagoniste (7), de préférence passant derrière la pièce antagoniste (7).

2. Agencement (100) selon la revendication 1, **caractérisé en ce que** la zone partielle réduite (3) est réalisée sous la forme d'une zone de coin supérieure, de préférence avant, réduite.

3. Agencement (100) selon la revendication 1 ou 2, **caractérisé en ce que** la zone partielle réduite (3) est formée sur un bord de fermeture secondaire supérieur, de préférence avant, du battant de porte (2).

4. Agencement (100) selon l'une quelconque des revendications précédentes, **caractérisé en ce que** la zone partielle réduite (3) est réalisée sous la forme d'une zone de coin oblique ou arrondie ou est adaptée à la forme de la structure de miroir extérieur (1).

5. Agencement (100) selon l'une quelconque des revendications précédentes, **caractérisé en ce que** le dispositif de maintien fermé (6, 7) est agencé dans un coin (E) tourné vers la zone partielle réduite (3) et/ou dans la zone partielle réduite (3).

6. Agencement (100) selon l'une quelconque des revendications précédentes, **caractérisé en ce que** le dispositif de maintien fermé (6, 7) est réalisé sous la forme d'un dispositif d'arrêt, d'un dispositif de friction et/ou d'un dispositif à goujon et clavette.

7. Agencement (100) selon l'une quelconque des revendications précédentes, **caractérisé en ce que** la pièce de retenue (6) comprend un goujon et la pièce antagoniste (7) comprend une clavette ou inversement.

8. Agencement (100) selon l'une quelconque des revendications précédentes, **caractérisé en ce que** la partie fonctionnelle (5) présente une ouverture (8) pour éviter une collision entre la partie fonctionnelle (5) et la pièce de retenue (6).

9. Agencement (100) selon l'une quelconque des revendications précédentes, **caractérisé en ce que** la construction de miroir extérieur (1) comprend au moins deux surfaces de miroir (S1, S2) orientées dans des directions différentes et/ou au moins deux configurations de miroir différentes, de préférence un miroir arrière et un miroir à angle large.

10. Agencement (100) selon l'une quelconque des revendications précédentes, **caractérisé en ce que** le battant de porte (2) fait partie d'une porte pivotante et coulissante, de préférence à deux battants, et/ou s'ouvre vers l'extérieur.

11. Agencement (100) selon la revendication 10, **caractérisé en ce que** la porte pivotante et coulissante est réalisée avec un actionnement de battant de porte séparé.

12. Véhicule, de préférence un véhicule utilitaire, notamment autobus ou camion, comprenant un agencement (100) selon l'une quelconque des revendications précédentes.

13. Véhicule selon la revendication 12, **caractérisé en ce qu'**au moins une surface de miroir (S1) de la construction de miroir extérieur (1) comprend un miroir à angle large et/ou est dirigée vers une zone d'entrée du véhicule et la zone partielle réduite (3) crée de la place pour l'au moins une surface de miroir (S1), une autre surface de miroir (S2) de la construction de miroir extérieur (1) servant de préférence de miroir arrière.
